# FASCICULE DE BREVET EUROPEEN

(11) **EP 3 490 731 B1**
(45) Date de publication et mention de la délivrance du brevet: **22.07.2020**
(21) Numéro de dépôt: 17733388.7
(22) Date de dépôt: 14.06.2017
(51) Int. Cl.: B08B 3/02, B05B 1/00, B05B 7/16

(54) **LANCE POUR LE NETTOYAGE, LA DESINFECTION ET L'ASSAINISSEMENT, DE TOUS TYPES D'OBJETS, INTEGRANT UN GENERATEUR DE VAPEUR, PROCEDES DE FONCTIONNEMENT ASSOCIES**
LANZE ZUM REINIGEN, DESINFIZIEREN UND ENTKEIMEN ALLER ARTEN VON GEGENSTÄNDEN MIT EINEM DAMPFERZEUGER UND ZUGEHÖRIGE BETRIEBSVERFAHREN
LANCE FOR CLEANING, DISINFECTING AND SANITISING ALL TYPES OF OBJECTS, INCORPORATING A STEAM GENERATOR, AND ASSOCIATED OPERATING METHODS

(30) Priorité: 29.07.2016 FR 1657352
(43) Date de publication de la demande: 05.06.2019
(73) Titulaire: Hilaire, Alain, 38130 Echirolles (FR)
(72) Inventeur: Hilaire, Alain, 38130 Echirolles (FR)
(74) Mandataire: Nony
(86) Numéro de dépôt international: PCT/EP2017/064627
(87) Numéro de publication internationale: WO 2018/019472

(56) Documents cités:
- GB-A- 1 449 483
- US-A- 3 069 092
- US-A- 3 258 578
- US-A- 4 282 903
- US-A1- 2003 233 726

## Description

### Domaine de l'invention

La présente invention concerne une lance pour le nettoyage, de désinfection et assainissement d'objets à la vapeur, et les procédés de fonctionnement d'une telle lance
Elle se rapporte plus particulièrement à la réalisation d'un générateur de vapeur d'eau au sein même de la lance.

La lance selon l'invention peut utiliser n'importe quelle eau. Il peut s'agir de préférence de l'eau pluviale collectée, mais aussi de l'eau issue d'un réseau d'eau potable.

### Etat de la technique

Il existe de multiples types d'installations de nettoyage de véhicules automobiles. Certaines sont intégralement automatisées, et comportent des rouleaux-brosses qui nettoient la surface extérieure des véhicules. Ces installations sont très populaires car elles ne nécessitent aucun effort pour l'utilisateur et sont relativement rapides. Cependant, ces installations à rouleaux-brosses utilisent de l'eau potable tirée des réseaux publics, cette eau potable étant en outre additivée à l'aide de produits nocifs qui la pollue. De ce fait, ces installations présentent un surcoût d'investissement et de fonctionnement lié au traitement de cette eau polluée.

D'autres installations, dites « self-service », laissent à l'utilisateur la libre utilisation d'un matériel mis à leur disposition. Ce matériel comporte typiquement une lance à eau sous haute pression, permettant d'enlever les saletés de la surface extérieure des véhicules. L'eau peut être mélangée préalablement à la sortie de la lance à un produit de nettoyage afin d'augmenter l'efficacité du nettoyage.

Les installations « self-service » à lances à eau haute pression sont moins onéreuses que les installations automatisées. Cependant, elles sont peu économes en eau potable et électricité et sont particulièrement polluantes et nécessitent de grandes quantités d'eau pour laver un véhicule automobile. En outre, elles nécessitent également l'utilisation de produits additifs qui provoquent une pollution de l'eau potable utilisée pour le lavage, ce qui, tout comme pour les installations à rouleaux-brosses, augmente indirectement leur coût d'exploitation direct et indirect par la pollution à combattre lorsque cela est possible.

Récemment, des installations « self-service » équipées de lances fonctionnant à vapeur d'eau, ont été mises en œuvre. On peut citer ici l'exemple d'installations de ce type mises en servie en Espagne par la société OSVIC Maquinaria.

Une installation de nettoyage à la vapeur présente de nombreux intérêts. En particulier, elle est moins coûteuse en investissement qu'une installation automatisée et plus économe en eau qu'une installation fonctionnant à eau sous haute pression. En outre, la vapeur d'eau peut être employée pour nettoyer à la fois l'intérieur et l'extérieur d'un véhicule. Cela est vrai sous réserve que la vapeur d'eau utilisée soit adaptée aux différents supports qu'elle a à traiter. En effet, la vapeur d'eau peut induire une humidité résiduelle parfois importante, source de gêne et de dégradation lente mais certaine de certains supports, de captation nouvelle de poussières de tout ordre, rendant le nettoyage quasi caduque, en même temps qu'accélérateur à la prolifération de bactéries organiques (champignons). Ces champignons sont eux-mêmes une source d'allergie prégnante, avec toutes les conséquences sanitaires qui en découlent. Cependant, et en sus, cette installation utilise également l'eau potable du réseau public et l'électricité issue du réseau de distribution local.

Pour finaliser le nettoyage intérieur, certaines installations fonctionnant à la vapeur d'eau intègrent un système d'aspiration séparé du poste de nettoyage avec lance. Cela contraint donc l'utilisateur à effectuer deux opérations distinctes à deux endroits différents (deux postes différents) avec deux types de matériel différents.

Par ailleurs, certaines de ces installations fonctionnant à la vapeur d'eau mettent également à profit des énergies renouvelables en intégrant un système de génération d'électricité tel que des panneaux photovoltaïques. Mais, on constate que les installations réalisées sont notoirement insuffisantes pour alimenter convenablement et suffisamment les besoins en nettoyage, même pour un particulier n'intervenant que sur son seul véhicule automobile.

Cependant, les installations à la vapeur déjà mises en service présentent encore des inconvénients majeurs que l'on peut énumérer comme suit.

Tout d'abord, ces installations restent tout aussi énergivores en électricité que les installations automatisées ou « self-service » à eau haute pression connues, et elles consomment aussi de l'eau potable tirée du réseau public.

En outre, tout comme les installations à eau sous pression, elles n'offrent pas la possibilité de sécher le véhicule convenablement. Ainsi, en général, l'utilisateur doit conduire le véhicule automobile mouillé à la sortie de l'installation pendant un certain temps afin de permettre à l'air ambiant de sécher le véhicule. Cela est nuisible notamment du fait que le véhicule mouillé peut accumuler des poussières rendant caduque au moins en partie le nettoyage réalisé ou encore que ce séchage naturel peut laisser des traces sur le véhicule.

Par ailleurs, si comme évoqué, certaines de ces installations proposent un système d'aspiration distinct du poste de nettoyage avec lance, cela n'est pas très pratique pour l'utilisateur qui doit au mieux changer d'ustensile de nettoyage en laissant son véhicule sur place, au pire le déplacer pour l'amener à proximité du système d'aspiration.

Enfin, la mise en marche de la chaudière d'un générateur de vapeur dans ces installations connues nécessite un temps de chauffe important et donc un temps d'attente important pour l'utilisateur qui peut être un frein à l'attractivité des installations de nettoyage « self-service » à vapeur.

Les documents US 3 258 578 A et US 2003/233726 A1, qui sont considérés comme les documents les plus proches de l'invention décrivent tous deux des lances nettoyage destinées à mettre en œuvre un nettoyage à la fois à la vapeur et à l'aspiration ou au soufflage d'air. La demande de brevet coréenne KR 20090034133 divulgue une installation de nettoyage de voiture à la vapeur, pour nettoyer à la fois l'intérieur et l'extérieur d'un véhicule par pulvérisation de vapeur à basse pression ou haute pression selon la sélection d'un opérateur à travers une pluralité de commutateurs de pression. La basse pression proposée dans cette installation ne permet pas d'obtenir de la vapeur sèche, ce qui humidifie grandement la surface concernée et par là, une efficacité de nettoyage moindre.

La demande de brevet coréenne KR 20100669923 divulgue une installation de nettoyage de véhicule à la vapeur alimentée en eau par une bouteille d'eau et alimenté en électricité par un panneau solaire. Cette procédure et ses caractéristiques sont insuffisantes pour alimenter convenablement et suffisamment les besoins en nettoyage, même pour un particulier n'intervenant que sur son seul véhicule automobile.

Ces deux demandes de brevet présentent les mêmes inconvénients que ceux présentés ci-avant, même si la demande KR 20100669923 propose une tentative d'autonomie en énergie électrique qui ne peut être que très partielle puisque dépendante des conditions météorologiques et limitée en capacité du fait de la présence d'un seul panneau solaire. En outre, l'utilisation d'une bouteille d'eau n'est pas réaliste pour une utilisation « self-service » qui doit être dimensionnée pour un grand nombre de véhicules journaliers et nécessite la mise en œuvre d'une pompe à eau. On peut préciser que la quantité d'une bouteille d'eau est elle-même insuffisante pour réaliser le nettoyage d'un seul véhicule, ne serait-ce que l'extérieur ou l'intérieur, puisque ce type d'installation, avec le système présenté, consomme, au minimum entre 3 et 6 litres d'eau pour un véhicule, selon l'utilisation qui en est faite.

C'est pourquoi l'inventeur de la présente invention a proposé et revendiqué dans la demande de brevet FR 3034064 A1, une nouvelle installation de nettoyage de véhicules qui fonctionne de manière combinée avec une génération de vapeur d'eau et un soufflage ou une aspiration, ce qui permet de réaliser un nettoyage efficace à la fois de l'intérieur et de l'extérieur des véhicules avec une multitude de combinaisons de nettoyage envisageables.

L'installation de nettoyage selon cette demande nécessite de mettre en place des générateurs de vapeur in situ, ce qui peut présenter un coût de fonctionnement énergétique important si l'installation est destinée à nettoyer des objets de moindre taille que les véhicules.

En outre, il existe un besoin de pouvoir disposer d'un appareil portatif permettant de se connecter à un réseau de distribution d'électricité et/ou à une production locale d'électricité par panneaux photovoltaïques et, à un réseau d'eau courante et/ou un réservoir de collecte d'eau de pluie, afin de réaliser et de permettre un nettoyage localisé sur une zone qui ne nécessiterait alors pas de réalisation de générateurs de vapeur indépendants ni de génie civil dédiée à l'implantation des composants de l'installation selon la demande de brevet précitée, notamment des générateurs de vapeur dédiés.

Le but de l'invention est de répondre au moins partiellement à ce besoin.

### Résumé de l'invention

L'invention se rapporte sous un premier de ses aspects à une lance de nettoyage, destinée à mettre en œuvre un nettoyage à la fois à la vapeur et à l'aspiration ou au soufflage d'air, comprenant en son sein:
- un premier circuit fluidique, dit circuit de d'aspiration ou de soufflage d'air, comprenant un embout de connexion d'air, adapté pour être connecté à un dispositif d'aspiration et/ou de soufflage, une buse d'aspiration ou de soufflage d'air, un conduit reliant l'embout de connexion d'air à la buse d'aspiration ou soufflage d'air;
- un deuxième circuit fluidique, dit circuit de génération de vapeur, comprenant, un embout de connexion à une alimentation en liquide sous pression, une buse d'éjection de vapeur, un conduit reliant l'embout de connexion d'eau à la buse d'éjection de vapeur, le conduit logeant d'amont en aval :
   - une buse de pulvérisation de liquide sous pression, adaptée à pulvériser le liquide sous pression en gouttelettes,
   - des moyens de génération de gouttelettes de vapeur à partir des gouttelettes pulvérisées,
   - une buse d'atomisation de la vapeur générée selon la revendication 1.

La taille de la buse de pulvérisation est adaptée aux besoins spécifiques auxquels la lance est destinée. On peut prévoir d'implanter une buse de pulvérisation amovible et interchangeable en fonction des besoins.

Ainsi, l'invention consiste essentiellement à intégrer au sein même d'une lance portative, un générateur de vapeur, ce qui permet, tout en conservant les caractéristiques et avantages du nettoyage combiné et simultané à la vapeur et au soufflage ou à l'aspiration d'air selon la demande de brevet FR 3034064 A1, de se connecter à n'importe quel réseau d'eau ou réservoir d'eau pluviale, le soufflage ou l'aspiration d'air pouvant être assuré par un dispositif classique, et d'assurer le nettoyage efficace de n'importe quel objet.

Le deuxième circuit peut donc transformer tout type d'eau. De manière plus générale, la lance selon l'invention peut générer en son sein une vapeur à partir de n'importe quel type de liquide pouvant être pulvérisé et transformé en vapeur. La vapeur générée par la lance est avantageusement sèche et surchauffée.

Ainsi, la lance selon l'invention en « self-service », peut être facilement amenée à proximité d'un objet à nettoyer à la vapeur, sans qu'il y ait de nécessité d'être à proximité d'une installation intégrant des générateurs de vapeur. En cas de désinfection, d'assainissement de l'intérieur de l'objet, on réalise simultanément une aspiration d'air et une projection de vapeur.

Les possibilités de nettoyage envisageables sont multiples, et un utilisateur peut choisir d'aspirer à l'extérieur de l'objet et de souffler à l'intérieur de l'objet s'il le souhaite. Le changement de mode de nettoyage peut se faire quasiment en temps réel du fait de l'agencement de la commande du (des) générateur(s) de vapeur et du dispositif de soufflage/aspiration sur la lance, ce qui permet aisément à un utilisateur de passer d'un mode de nettoyage à un autre, avec une température et une pression de vapeur adaptées selon son choix de programme sélectionné.

La lance selon l'invention permet le même grand nombre de commandes différenciées suivant l'enseignement de la demande FR 3034064 A1, qui induisent des modes de nettoyage variés, ce qui permet d'obtenir une efficacité de nettoyage optimale à la fois pour l'intérieur et l'extérieur de n'importe quel objet. Cette grande variété de commandes est réalisée simplement pour un utilisateur qui n'a qu'à actionner un nombre restreints de commandes (boutons) tous agencés sur la lance. On précise que par objet, il faut comprendre ici et dans le cadre de l'invention tout solide, de quelque nature que ce soit. Ainsi, sont concernés les objets déplaçables mais aussi tout objet enserrés et/ou non déplaçables ou séparables du reste. Les objets visés de préférence par le nettoyage à l'aide d'une lance de l'invention sont les parois de tous volumes, clos ou ouvert, intérieurs ou extérieurs, ventilés ou non.

Selon une variante avantageuse, la buse d'aspiration ou de soufflage d'air est fixe tandis que la buse d'éjection de la vapeur est montée coulissante entre une position extrême éloignée correspondant à un fonctionnement de soufflage du circuit de soufflage d'air, à la position extrême rapprochée correspondant à un fonctionnement d'aspiration du circuit d'aspiration d'air.

Selon un mode de réalisation avantageux, les moyens de génération de vapeur d'eau comprennent une lame chauffante agencée en travers du conduit, adaptée pour chauffer les gouttelettes d'eau pulvérisées qui circulent à proximité et les transformer en gouttelettes de vapeur. La lame est de préférence constituée d'un métal adapté pour chauffer très rapidement sans se déformer, et à réémettre cette température par conduction instantanément. La vapeur d'eau ainsi créée par la lame chauffante a de préférence une température entre 125 et 200 °C et une pression entre 7 et 10 bars. Mais il est totalement possible, pour des besoins spécifiques, d'augmenter et la température et la pression. Si besoin, les matériaux des composants de la lance peuvent être modifiés afin de conserver les caractéristiques de transformation de vapeur et de préserver les éléments de sécurité en soi et vis-à-vis de l'utilisateur ainsi que du milieu environnant la lance.

De préférence, la lame chauffante est agencée en divisant le conduit en deux sections de passage sensiblement égales.

La lame chauffante peut être maintenue par au moins une de ses extrémités dans la paroi du conduit par un joint isolant à la fois thermique et électrique, tel qu'en néoprène ou similaire.

Avantageusement, la lame chauffante est alimentée électriquement par un générateur d'impulsions électriques dont l'amplitude et la fréquence sont adaptées pour créer, simultanément à la transformation de gouttelettes de vapeur, une ionisation de ces dernières. Ioniser les gouttelettes de vapeur leur confère une capacité à ouvrir des bactéries à coques, et, ainsi, à les tuer, par la chaleur auxquelles elles sont soumises.

Ainsi, la projection de vapeur ionisée permet une désinfection de surfaces recouvertes de bactéries à coques.

Selon un mode de réalisation avantageux, le conduit du circuit de génération de vapeur d'eau loge en outre entre la buse de pulvérisation et les moyens de génération de gouttelettes de vapeur d'eau, un dispositif à effet venturi adapté pour diminuer la pression afin d'augmenter l'aspiration des gouttelettes pulvérisées. La mise en œuvre ou non du dispositif à venturi peut dépendre de l'application pour laquelle la lance est dimensionnée et notamment la gamme de pression d'eau qui l'alimente.

Le corps de la lance peut être en deux parties dont une dite crosse intégrant les embouts de connexion d'air et à l'eau sous pression et l'autre dite guide intégrant la buse d'aspiration ou de soufflage d'air et la buse d'éjection de vapeur, la crosse et le guide étant montés pivotantes l'une par rapport à l'autre autour d'un axe (X) orthogonal aux directions d'aspiration/soufflage d'air et d'éjection de vapeur, les conduits étant flexibles ou comprenant un élément formant rallonge, absorbant leur variation de longueur lorsque le pivotement est effectué, au moins dans la zone de pivotement de la crosse par rapport au guide.

Le pivotement angulaire du guide par rapport à la crosse peut, par exemple, aller de 0 à 45°. L'articulation ainsi conférée à la lance peut permettre à un utilisateur de réaliser le nettoyage de surfaces à recoins difficiles d'accès.

Selon une variante avantageuse, la lance peut comprendre une roulette montée libre en rotation sur la buse d'éjection de la vapeur et munie de picots sur sa périphérie, adaptés pour relever les poils de revêtements en tissu, en moquette ou autre revêtements de type pileux, lorsque la roulette est déplacée dessus.

Selon une autre variante avantageuse, la lance peut comprendre un clapet mobile selon différentes positions de fermeture dans lesquelles il obture partiellement plus ou moins la buse d'éjection.

L'invention se rapporte également à un procédé de fonctionnement d'une lance de décrite ci-dessus en vue d'un nettoyage de l'extérieur d'un objet, comportant les étapes suivantes :
a/ soufflage d'air dans le premier circuit et simultanément alimentation en eau du deuxième circuit,
b/ projection de la vapeur générée dans le deuxième circuit par la buse d'éjection de vapeur, et simultanément soufflage d'air par la buse de soufflage, parallèlement et à distance de la vapeur projetée. L'ionisation de la vapeur n'est alors pas requise, mais le choix de la maintenir ou non est laissée selon les désidératas de l'utilisateur, selon la revendication 11.

L'invention se rapporte également à un procédé de fonctionnement d'une lance décrite ci-dessus en vue d'un nettoyage, désinfection et assainissement de l'intérieur d'un objet, comportant les étapes suivantes :
a'/ aspiration d'air dans le premier circuit et simultanément alimentation en eau du deuxième circuit,
b'/ projection de la vapeur générée dans le deuxième circuit par la buse d'éjection de vapeur, et simultanément aspiration d'air par la buse de soufflage, parallèlement et à distance de la vapeur projetée. Il est possible, par une commande judicieusement disposée sur le dessus de la lance, de limiter le fonctionnement à la seule aspiration ou à la seule projection de vapeur, ionisée ou pas, automatiquement, selon la commande utilisée, selon la revendication 12.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue en coupe longitudinale partielle d'une lance de nettoyage à la vapeur selon un mode de réalisation de l'invention, la figure 1 montrant les deux circuits fluidiques conformes à l'invention ;
- la figure 2 est une vue de dessous de la lance selon la figure 1, la figure 2 montrant le circuit fluidique de génération de vapeur à partir de l'amenée d'eau sous pression ;
- la figure 3 est une vue en coupe transversale du conduit du circuit fluidique de génération de vapeur, réalisée au niveau de la zone Z3 au sein de laquelle un générateur de vapeur selon un mode de réalisation de l'invention est agencé ;
- la figure 4 représente schématiquement l'extrémité libre du circuit fluidique de génération de vapeur, la figure 4 montrant une variante de réalisation de la buse d'atomisation des gouttelettes prolongée par la buse d'éjection des gouttelettes atomisées ;
- la figure 5 illustre schématiquement une variante de réalisation de la buse d'éjection de vapeur de la lance de nettoyage selon l'invention.

Dans l'ensemble de la présente demande, les termes « entrée », « sortie » « aval » et « amont » sont à comprendre en référence au sens de circulation des fluides (eau, vapeur, air, ou air chargé de poussières) au sein d'une lance de nettoyage selon l'invention.

Les éléments représentés ne sont pas nécessairement à l'échelle.

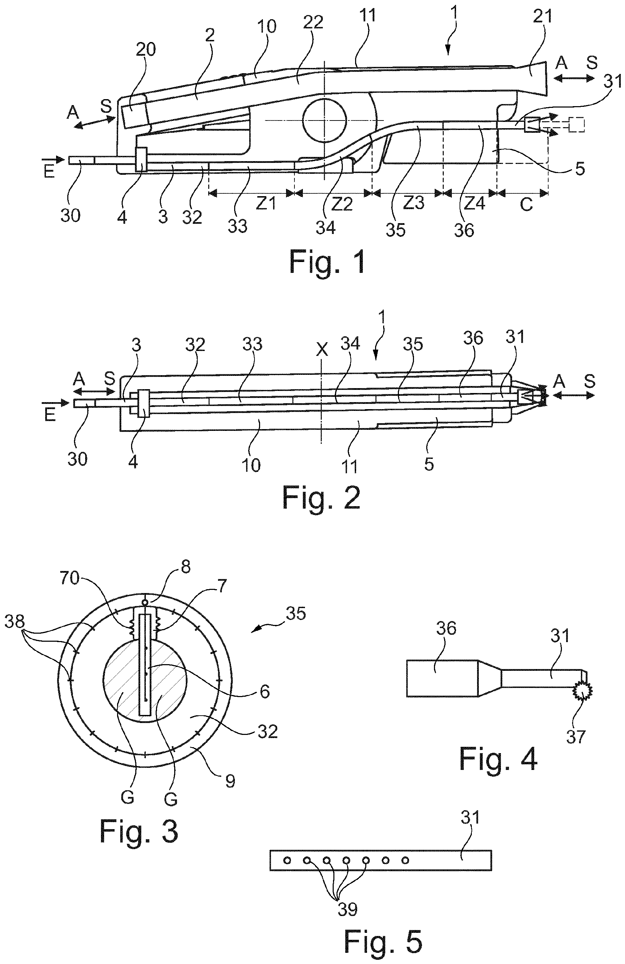

Sur les figures 1 et 2, les flèches indiquent le sens de circulation de fluides, à savoir respectivement A pour l'aspiration d'air, S pour le soufflage d'air et E pour le sens de circulation d'eau transformée en vapeur au sein de la lance.

On a représenté en figures 1 et 2, une lance 1 de nettoyage d'objets à la vapeur selon un mode de réalisation de l'invention.

La lance 1 intègre en son sein deux circuits fluidiques 2, 3 indépendants.

Le premier circuit fluidique 2 est celui dédié à l'aspiration ou au soufflage d'air. Il comprend tout d'abord à une extrémité de la lance un embout de connexion d'air 20, adapté pour être connecté à un dispositif d'aspiration et/ou de soufflage distinct de la lance. A l'autre extrémité, est prévue une buse 21 d'aspiration ou de soufflage d'air. Un conduit 22 relie l'embout de connexion d'air 20 à la buse d'aspiration ou soufflage d'air 21.

Le deuxième circuit fluidique 3 est celui dédié à la génération de vapeur d'eau. Il comprend à une extrémité, un embout de connexion 30 à une alimentation en eau sous pression. De préférence, l'eau qui alimente ce circuit 3 est de l'eau de pluie récoltée. Mais, elle peut aussi être de l'eau issue du réseau d'eau potable. De préférence également, l'eau arrive sous une pression entre 2 et 15 bars à l'entrée 30. Une pression supérieure est tout à fait envisageable, selon besoins spécifiques d'utilisation.

Un clapet anti-retour 4, commandé électriquement par impulsions depuis un bouton de sélection commandant la production ou non, de vapeur, situé sur le dessus de la partie gauche de la poignée 5 de la lance peut être avantageusement prévue pour interrompre instantanément l'arrivée d'eau sous pression dans la lance.

A l'autre extrémité du circuit 3, est prévue une buse 31 d'éjection de vapeur d'eau.

Un conduit 32 au sein duquel la vapeur d'eau est générée, relie l'embout de connexion d'eau 30 à la buse d'éjection de vapeur 31.

Comme symbolisé en figure 1, le conduit 32 est divisé en quatre zones distinctes, Z1, Z2, Z3, Z4 d'amont en aval, entre l'électrovanne 4 et la buse d'éjection de vapeur 31.

Dans la première zone Z1, le conduit 32 loge une buse de pulvérisation 33 de l'eau sous pression, adaptée à pulvériser l'eau sous pression en gouttelettes. La taille des gouttelettes pulvérisées est prédéterminée en fonction de la génération de vapeur à réaliser par la suite. La buse 33 peut être une buse déjà utilisée dans de nombreuses autres applications.

Dans la deuxième zone Z2, un dispositif à effet venturi 34 peut être implanté dans le conduit 32 afin d'augmenter le phénomène d'aspiration des gouttelettes pulvérisées en direction de la buse d'éjection 31.

Dans la troisième zone Z3, le conduit 32 loge des moyens de génération de gouttelettes de vapeur d'eau 35 à partir des gouttelettes pulvérisées.

On a représenté en figure 3, un mode de réalisation avantageux de ces moyens : il s'agit d'une lame chauffante 6 agencée en travers du conduit, adaptée pour chauffer les gouttelettes d'eau pulvérisées qui circulent à proximité et les transformer en gouttelettes de vapeur. La lame 6 peut avoir typiquement une longueur de 10 à 13 cm. La lame 6 peut être avantageusement en cuivre ou tout matériau métallique à très bonne conductivité thermique.

Tel qu'illustré, la lame chauffante 6 est agencée en divisant le conduit 32 en deux sections de passage sensiblement égales.

Le conduit 32 entourant cette lame 6, est constitué au moins dans cette zone Z3, d'un conduit rond métallique, de préférence en acier inoxydable. Le diamètre de ce conduit 32 peut ainsi être prévu avec une surépaisseur uniquement dans cette zone Z3. Typiquement, le diamètre de ce conduit 32 est compris entre 3 et 6 mm dans cette zone Z3. Elle peut être de section inférieure ou supérieure, selon le type et besoins de l'intervention. Cette surépaisseur de conduit 32 peut être réalisée sur toute la longueur de la lame 6 et se prolonger au-delà, typiquement sur 1 à 2 cm au-delà de la lame 6.

La lame chauffante 6 est maintenue par au moins une de ses extrémités dans la paroi du conduit 32 par un joint 7 isolant à la fois thermique et électrique, tel qu'en néoprène. Comme illustré en figure 3, le joint 7 est emmanché en force dans une ouverture du conduit 32 prévue à cet effet et comprend des crans 70 pour maintenir une parfaite étanchéité et empêcher à la vapeur créée de sortir par l'ouverture.

Un fil 8 permet d'alimenter électriquement la lame 6. Le courant électrique qui parcourt le fil 8 est adapté pour chauffer la lame 6 par effet Joule en un temps très court, typiquement en quelques secondes. La lame 6 peut ainsi atteindre une température de préférence entre 200 et 800 °C. La vapeur ainsi créée par la lame 6 chauffante a une température entre 125 et 200 °C et une pression entre 7 et 10 bars. La température et la pression peuvent être augmentées selon type et besoins d'utilisations.

Dans une variante avantageuse, le courant électrique qui alimente le fil 8 peut être sous forme d'impulsions électriques adaptées pour donner ou enlever des charges électriques aux gouttelettes de vapeur générées. Ainsi, on ionise simultanément la vapeur d'eau générée. Cela est avantageux, car une vapeur d'eau ionisée a la propriété d'ouvrir les bactéries à coques, et, ainsi, à les tuer, par la chaleur de la vapeur auxquelles elles sont soumises.

Afin d'isoler thermiquement au mieux le conduit 32, celui-ci est recouvert au moins dans la zone Z3, d'une gaine 9 en matériau isolant thermiquement, typiquement en Kevlar. Ce recouvrement est prolongé de façon judicieuse afin d'éviter que les phénomènes générés par la production de vapeur, sur la longueur en question, ne soient transmis au reste de la lance.

Pour assurer un bon maintien de serrage de la gaine 9 sur le conduit 32, celui-ci peut comprendre à sa périphérie des stries 38.

Dans une quatrième zone Z4, immédiatement en aval de la lame chauffante 6, est agencée une buse d'atomisation 36 de la vapeur d'eau générée. Typiquement, la buse 36 peut être agencée à une distance de 1 à 2 cm de la lame 6.

La buse d'atomisation 36 créée des gouttelettes de vapeur de taille extrêmement réduite, qui peuvent être ionisées comme expliqué ci-avant. Typiquement, les gouttelettes peuvent avoir une dimension jusqu'au nanomètre.

Comme montré en figure 4, la buse d'atomisation 36 est prolongée de la buse d'éjection 31 de la vapeur atomisée et le cas échéant ionisée.

La buse d'éjection 31 peut avoir la forme d'un bec plat perforé. Typiquement, la hauteur du bec peut être de l'ordre de 1 à 3 mm, et sa longueur de l'ordre de 5 à 6 cm.

On a illustré en figure 5, une variante avantageuse d'un tel bec plat 31 perforé d'une multitude de trous, typiquement de 0,5 à 1 mm de diamètre, régulièrement espacés, typiquement de 0,8 à 1,2 cm, sur la longueur du bec. La sortie de vapeur ainsi réalisée est à même, selon une disposition avantageuse, de pivoter de la position horizontale à une position verticale,, selon les besoins de l'utilisation et d'accès à certaines parties d'objets difficilement accessibles.

Une variante avantageuse consiste en une roulette 37 montée libre en rotation sur la buse d'éjection 31 et munie de picots sur sa périphérie qui sont adaptés pour relever les poils de revêtements en tissu, en moquette ou autre revêtements de type pileux, lorsque la roulette est déplacée dessus.

Enfin, la lance peut comprendre un clapet (non représenté) mobile selon différentes positions de fermeture dans lesquelles il obture partiellement plus ou moins la buse d'éjection 31, lorsque l'utilisateur estime utile de faire varier la projection de la vapeur en un nuage différent, impactant sur la surface traitée et la pression ainsi éjectée et appliquée sur le support considéré.

Dans les modes de réalisation illustrés, le corps de la lance est en deux parties dont une crosse 10 qui intègre les embouts de connexion d'air 20 et à l'eau sous pression 30 et une partie des circuits de fluides 2, 3. L'autre partie forme un guide 11 intégrant la buse d'aspiration ou de soufflage d'air 21 et la buse d'éjection de vapeur 31, ainsi que l'autre partie des circuits de fluides.

Tel qu'illustré, la crosse 10 et le guide 11 sont montés pivotants l'une par rapport à l'autre autour d'un axe X orthogonal aux directions d'aspiration/soufflage d'air et d'éjection de vapeur. Pour ne pas gêner le pivotement, les conduits 22, 32 sont flexibles ou comprennent un élément formant rallonge, absorbant leur variation de longueur lorsque le pivotement est effectué, au moins dans la zone Z2 de pivotement de la crosse par rapport au guide.

D'autres caractéristiques peuvent également être envisagées en fonction de l'ensoleillement de l'endroit où est installée l'installation de nettoyage, du nombre de clients par jour, et de la qualité du nettoyage souhaité.

L'invention n'est pas limitée aux exemples qui viennent d'être décrits ; on peut notamment combiner entre elles des caractéristiques des exemples illustrés au sein de variantes non illustrées sans s'éloigner de l'invention telle que définie par les revendications.

## Revendications

1. Lance de nettoyage (1), destinée à mettre en œuvre un nettoyage à la fois à la vapeur et à l'aspiration ou au soufflage d'air, comprenant en son sein:
- un premier circuit fluidique (2), dit circuit de d'aspiration ou de soufflage d'air, comprenant un embout de connexion d'air (20), adapté pour être connecté à un dispositif d'aspiration et/ou de soufflage, une buse (21) d'aspiration ou de soufflage d'air, un conduit (22) reliant l'embout de connexion d'air à la buse d'aspiration ou soufflage d'air;
- un deuxième circuit fluidique (3), dit circuit de génération de vapeur, comprenant, un embout de connexion (30) à une alimentation en liquide sous pression, une buse (31) d'éjection de vapeur, un conduit (32) reliant l'embout de connexion à la buse d'éjection de vapeur, le conduit logeant d'amont en aval :
• une buse de pulvérisation (33) de liquide sous pression, adaptée à pulvériser le liquide sous pression en gouttelettes,
• des moyens de génération de gouttelettes de vapeur (35) à partir des gouttelettes pulvérisées,
• une buse d'atomisation (36) de la vapeur générée.

2. Lance de nettoyage selon la revendication 1, la buse d'aspiration ou de soufflage d'air étant fixe tandis que la buse d'éjection de la vapeur est montée coulissante entre une position extrême éloignée correspondant à un fonctionnement de soufflage du circuit de soufflage d'air, à la position extrême rapprochée correspondant à un fonctionnement d'aspiration du circuit d'aspiration d'air.

3. Lance de nettoyage (1) selon la revendication 1 ou 2, les moyens de génération de vapeur d'eau (35) comprenant une lame chauffante (6) agencée en travers du conduit, adaptée pour chauffer les gouttelettes d'eau pulvérisées qui circulent à proximité et les transformer en gouttelettes de vapeur.

4. Lance de nettoyage (1) selon la revendication 3, la lame chauffante (6) étant agencée en divisant le conduit (32) en deux sections de passage sensiblement égales.

5. Lance de nettoyage (1) selon la revendication 3 ou 4, la lame chauffante étant maintenue par au moins une de ses extrémités dans la paroi du conduit par un joint (7) isolant à la fois thermique et électrique, tel qu'en néoprène.

6. Lance de nettoyage (1) selon l'une des revendications 3 à 5, la lame chauffante (6) étant alimentée électriquement par un générateur d'impulsions électriques dont l'amplitude et la fréquence sont adaptées pour créer, simultanément à la transformation de gouttelettes de vapeur, une ionisation de ces dernières.

7. Lance de nettoyage (1) selon l'une des revendications précédentes, le conduit (32) du circuit de génération de vapeur d'eau (3) logeant en outre entre la buse de pulvérisation (33) et les moyens (35) de génération de gouttelettes de vapeur d'eau, un dispositif à effet venturi (34) adapté pour diminuer la pression afin d'augmenter l'aspiration des gouttelettes pulvérisées.

8. Lance de nettoyage (1) selon l'une des revendications précédentes, dont le corps est en deux parties dont une dite crosse (10) intégrant les embouts de connexion d'air et à l'eau sous pression et l'autre dite guide (11) intégrant la buse d'aspiration ou de soufflage d'air et la buse d'éjection de vapeur, la crosse et le guide étant montés pivotantes l'une par rapport à l'autre autour d'un axe (X) orthogonal aux directions d'aspiration/soufflage d'air et d'éjection de vapeur, les conduits (22, 32) étant flexibles ou comprenant un élément formant rallonge, absorbant leur variation de longueur lorsque le pivotement est effectué, au moins dans la zone (Z2) de pivotement de la crosse par rapport au guide.

9. Lance de nettoyage (1) selon l'une des revendications précédentes, comprenant une roulette (37) montée libre en rotation sur la buse d'éjection de la vapeur et munie de picots sur sa périphérie, adaptés pour relever les poils de revêtements en tissu, en moquette ou autre revêtements de type pileux, lorsque la roulette est déplacée dessus.

10. Lance de nettoyage (1) selon l'une des revendications précédentes, comprenant un clapet mobile selon différentes positions de fermeture dans lesquelles il obture partiellement plus ou moins la buse d'éjection.

11. Procédé de fonctionnement d'une lance de nettoyage selon l'une des revendications 1 à 10 en vue d'un nettoyage de l'extérieur d'un objet, comportant les étapes suivantes :
a/ soufflage d'air dans le premier circuit et simultanément alimentation en eau du deuxième circuit,
b/ projection de la vapeur générée dans le deuxième circuit par la buse d'éjection de vapeur, et simultanément soufflage d'air par la buse de soufflage, parallèlement et à distance de la vapeur projetée.

12. Procédé de fonctionnement d'une lance de nettoyage selon l'une des revendications 1 à 10 en vue d'un nettoyage, désinfection et assainissement de l'intérieur d'un objet, comportant les étapes suivantes :
a'/ aspiration d'air dans le premier circuit et simultanément alimentation en eau du deuxième circuit,
b'/ projection de la vapeur générée dans le deuxième circuit par la buse d'éjection de vapeur, et simultanément aspiration d'air par la buse de soufflage, parallèlement et à distance de la vapeur projetée.

## Patentansprüche

1. Reinigungslanze (1), welche dazu bestimmt ist, eine Reinigung gleichzeitig mit Dampf und mit Ansaugung oder mit Einblasen von Luft durchzuführen, und in ihrem Inneren umfasst:
- einen ersten Fluidkreislauf (2), Luftansaug- oder Luftblaskreislauf genannt, welcher einen Luftanschlussstutzen (20), der dafür ausgelegt ist, mit einer Saug- und/oder Blasvorrichtung verbunden zu werden, eine Luftansaug- oder Luftblasdüse (21) und ein Leitungsrohr (22), das den Luftanschlussstutzen mit der Luftansaug- oder Luftblasdüse verbindet, umfasst,
- einen zweiten Fluidkreislauf (3), Dampferzeugungskreislauf genannt, welcher einen Stutzen zum Anschluss (30) an eine Zuführung von Druckflüssigkeit, eine Dampfauslassdüse (31) und ein Leitungsrohr (32), das den Anschlussstutzen mit der Dampfauslassdüse verbindet, umfasst, wobei das Leitungsrohr in Strömungsrichtung nacheinander aufnimmt:
• eine Zerstäubungsdüse (33) für Druckflüssigkeit, die dafür ausgelegt ist, die Druckflüssigkeit zu Tröpfchen zu zerstäuben,
• Mittel zur Erzeugung von Dampftröpfchen (35) aus den zerstäubten Tröpfchen,
• eine Düse zur Feinzerstäubung (36) des erzeugten Dampfes.

2. Reinigungslanze nach Anspruch 1, wobei die Luftansaug- oder Luftblasdüse feststehend ist, während die Auslassdüse für den Dampf gleitend zwischen einer entfernten Position, die einem Blasbetrieb des Luftblaskreislaufs entspricht, und der nahen Endposition, die einem Saugbetrieb des Luftansaugkreislaufs entspricht, angebracht ist.

3. Reinigungslanze (1) nach Anspruch 1 oder 2, wobei die Mittel zur Erzeugung von Wasserdampf (35) eine quer im Leitungsrohr angeordnete Heizlamelle (6) umfassen, die dafür ausgelegt ist, die zerstäubten Wassertröpfchen zu erwärmen, die in der Nähe zirkulieren, und sie in Dampftröpfchen zu verwandeln.

4. Reinigungslanze (1) nach Anspruch 3, wobei die Heizlamelle (6) so angeordnet ist, dass sie das Leitungsrohr (32) in zwei im Wesentlichen gleiche Durchflussabschnitte aufteilt.

5. Reinigungslanze (1) nach Anspruch 3 oder 4, wobei die Heizlamelle an wenigstens einem ihrer Enden durch eine sowohl thermisch als auch elektrisch isolierende Verbindung (7), wie etwa aus Neopren, in der Wand des Leitungsrohres gehalten wird.

6. Reinigungslanze (1) nach einem der Ansprüche 3 bis 5, wobei die Heizlamelle (6) von einem Generator elektrischer Impulse mit Strom versorgt wird, deren Amplitude und Frequenz dafür ausgelegt sind, gleichzeitig mit der Umwandlung in Dampftröpfchen eine Ionisation dieser Letzteren zu bewirken.

7. Reinigungslanze (1) nach einem der vorhergehenden Ansprüche, wobei das Leitungsrohr (32) des Kreislaufs zur Erzeugung von Wasserdampf (3) außerdem zwischen der Zerstäubungsdüse (33) und den Mitteln (35) zur Erzeugung von Wasserdampftröpfchen eine Venturi-Vorrichtung (34) aufnimmt, die dafür ausgelegt ist, den Druck zu verringern, um die Ansaugung der zerstäubten Tröpfchen zu verstärken.

8. Reinigungslanze (1) nach einem der vorhergehenden Ansprüche, deren Körper aus zwei Teilen besteht, von denen in einen, Schaft (10) genannt, die Anschlussstutzen für Luft und Druckwasser integriert sind und in den anderen, Führung (11) genannt, die Luftansaug- oder Luftblasdüse und die Dampfauslassdüse integriert sind, wobei der Schaft und die Führung relativ zueinander schwenkbar um eine Achse (X) angebracht sind, die orthogonal zu den Richtungen des Ansaugens/Blasens von Luft und des Auslassens von Dampf ist, wobei die Leitungsrohre (22, 32) flexibel sind oder ein eine Verlängerung bildendes Element umfassen, das ihre Längenänderung aufnimmt, wenn die Schwenkung durchgeführt wird, zumindest im Bereich (Z2) der Schwenkung des Schaftes in Bezug auf die Führung.

9. Reinigungslanze (1) nach einem der vorhergehenden Ansprüche, welche eine Rolle (37) umfasst, die frei drehbar an der Dampfauslassdüse angebracht ist und auf ihrem Umfang mit Stacheln versehen ist, die dafür ausgelegt sind, die Borsten von Stoffbezügen, von Teppichböden oder anderen mit Haaren versehenen Überzügen aufzurichten.

10. Reinigungslanze (1) nach einem der vorhergehenden Ansprüche, welche eine Klappe umfasst, die in verschiedene Verschlusspositionen bewegt werden kann, in denen sie die Auslassdüse teilweise und mehr oder weniger weit verschließt.

11. Betriebsverfahren für eine Reinigungslanze nach einem der Ansprüche 1 bis 10 für eine Reinigung der Außenseite eines Objekts, die folgenden Schritte umfassend:
a/ Blasen von Luft im ersten Kreislauf und gleichzeitig Versorgung des zweiten Kreislaufs mit Wasser,
b/ Ausstoßen des Dampfes, der im zweiten Kreislauf erzeugt wurde, durch die Dampfauslassdüse und gleichzeitig Blasen von Luft durch die Blasdüse, parallel zu dem ausgestoßenen Dampf und in einem Abstand von ihm.

12. Betriebsverfahren für eine Reinigungslanze nach einem der Ansprüche 1 bis 10 für eine Reinigung, Desinfektion und Entkeimung des Inneren eines Objekts, die folgenden Schritte umfassend:
a'/ Ansaugen von Luft in den ersten Kreislauf und gleichzeitig Versorgung des zweiten Kreislaufs mit Wasser,
b'/ Ausstoßen des Dampfes, der im zweiten Kreislauf erzeugt wurde, durch die Dampfauslassdüse und gleichzeitig Ansaugen von Luft durch die Blasdüse, parallel zu dem ausgestoßenen Dampf und in einem Abstand von ihm.

## Claims

1. A cleaning lance (1) intended to perform cleaning using both steam and the suction or blowing of air, comprising within it:
- a first fluidic circuit (2), referred to as the air-suction or air-blowing circuit, comprising an air connection end piece (20) designed to be connected to a suction and/or blowing device, an air-suction or air-blowing nozzle (21), a duct (22) connecting the air connection end piece to the air-suction or air-blowing nozzle;
- a second fluidic circuit (3), referred to as the steam generating circuit, comprising a connection end piece (30) for connection to a pressurized liquid supply, a steam ejection nozzle (31), a duct (32) connecting the connection end piece to the steam ejection nozzle, the duct housing, from upstream to downstream:
• a pressurized-liquid spray nozzle (33) designed to spray the pressurized liquid in the form of droplets,
• means (35) for generating droplets of steam from the droplets of spray,
• a nozzle (36) for atomizing the generated steam.

2. The cleaning lance as claimed in claim 1, the air-suction or air-blowing nozzle being fixed, whereas the steam ejection nozzle is mounted with the ability to slide between a distant extreme position corresponding to blowing operation of the air-blowing circuit, into the closed-up extreme position corresponding to suction operation of the air-suction circuit.

3. The cleaning lance (1) as claimed in claim 1 or 2, the means (35) for generating water vapor (steam) comprising a heating blade (6) arranged across the duct, designed to heat the droplets of water spray circulating in its vicinity and turn them into droplets of steam.

4. The cleaning lance (1) as claimed in claim 3, the heating blade (6) being arranged such that it divides the duct (32) into two passages of substantially equal cross section.

5. The cleaning lance (1) as claimed in claim 3 or 4, the heating blade being held by at least one its ends in the wall of the duct by a seal (7) that is both thermally and electrically insulating, such as one made of neoprene.

6. The cleaning lance (1) as claimed in one of claims 3 to 5, the heating blade (6) being electrically powered by an electric pulse generator the amplitude and frequency of the pulse of which are suited to ionizing the droplets at the same time as same are being turned into steam.

7. The cleaning lance (1) as claimed in one of the preceding claims, the duct (32) of the steam generating circuit (3) further housing, between the spray nozzle (33) and the means (35) for generating droplets of steam, a venturi-effect device (34) suited to decreasing the pressure in order to increase the suction on the droplets of spray.

8. The cleaning lance (1) as claimed in one of the preceding claims, of which the body is in two parts, one of them referred to as a stock (10) incorporating the air-connection and pressurized-water-connection end pieces and the other referred to as a guide (11) incorporating the air-suction or air-blowing nozzle and the steam ejection nozzle, the stock and the guide being mounted with the ability to pivot one with respect to the other about an axis (X) orthogonal to the directions of sucking/blowing with air and of ejection of steam, the ducts (22, 32) being flexible or comprising an extension-forming element that absorbs their variation in length when pivoting is performed, at least in the region (Z2) of pivoting of the stock with respect to the guide.

9. The cleaning lance (1) as claimed in one of the preceding claims, comprising a wheel (37) mounted with the freedom to rotate on the steam ejection nozzle and equipped with spikes on its periphery, these being suited to lifting the pile of coverings made of fabric, carpet or other coverings of pile type, when the wheel is moved over them.

10. The cleaning lance (1) as claimed in one of the preceding claims, comprising a shutter able to move into various positions of closure in which it partially closes off the ejection nozzle to a greater or lesser extent.

11. A method of operation of a cleaning lance as claimed in one of claims 1 to 10 with a view to cleaning the outside of an object, comprising the following steps:
a/ blowing air into the first circuit and at the same time supplying water to the second circuit,
b/ spraying the steam generated in the second circuit through the steam ejection nozzle, and at the same time blowing air through the blowing nozzle, parallel to and some distance away from the sprayed steam.

12. A method of operation of a cleaning lance as claimed in one of claims 1 to 10 with a view to cleaning, disinfecting and sanitizing the inside of an object, comprising the following steps:
a'/ sucking air into the first circuit and at the same time supplying water to the second circuit,
b'/ spraying the steam generated in the second circuit through the steam ejection nozzle, and at the same time sucking air through the blowing nozzle, parallel to and some distance away from the sprayed steam.
